(19) Europäisches Patentamt
European Patent Office
Office européen des brevets

(11) EP 1 184 445 A2

(12) **EUROPEAN PATENT APPLICATION**

(43) Date of publication:
06.03.2002 Bulletin 2002/10

(51) Int Cl.[7]: **C10K 3/04**, C01B 3/48, H01M 8/06, B01J 23/42, B01J 37/02, B01J 21/06

(21) Application number: 01121114.1

(22) Date of filing: 03.09.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 04.09.2000 JP 2000266580

(71) Applicant: **TOYOTA JIDOSHA KABUSHIKI KAISHA**
**Toyota-shi, Aichi 471-8571 (JP)**

(72) Inventor: **Hirabayashi, Takeshi**
**Toyota-shi, Aichi-ken, 471-8571 (JP)**

(74) Representative:
**Leson, Thomas Johannes Alois, Dipl.-Ing.**
**Tiedtke-Bühling-Kinne & Partner GbR,**
**TBK-Patent, Bavariaring 4**
**80336 München (DE)**

(54) **Shift catalyst, fuel cell and production method for the catalyst**

(57) A shift catalyst includes Pt supported on a porous body of $TiO_2$ to which a predetermined oxide is added. The predetermined oxide added is at least one oxide of oxides of Al, Si, P, S and V. The addition of the oxide can be accomplished by mixing a raw material gel of the oxide during a process of forming a powder of $TiO_2$, or it can be accomplished by impregnating a porous body of $TiO_2$ with a nitrate salt solution of the oxide or the like. The amount of Pt supported is preferably about 0.1 to about 20 wt.%. The amount of the oxide added is preferably about 15 wt.% or less. The catalysts (1) ∼ (4) containing the oxide exhibits a higher CO reduction rate than one of conventional catalysts (c1) ∼ (c3). Furthermore, the catalyst reduces the capability deterioration under a high-SV condition, and also has heat resistance.

# F I G. 1

EP 1 184 445 A2

**Description**

BACKGROUND OF THE INVENTION

1. Field of Invention

The invention relates to a shift catalyst for use in a shift reaction, a reactor and a fuel cell including the shift catalyst, and a method for producing the shift catalyst.

2. Description of Related Art

There are known arts for generating hydrogen, which serves as a fuel of a fuel cell, by reforming a raw material, such as alcohol, hydrocarbon, ether, aldehyde, etc. The chemical reactions of such raw materials usually produce carbon monoxide, which tends to poison electrodes of fuel cells, in addition to hydrogen. In order to produce hydrogen from the raw material with an increased efficiency and reduce the concentration of carbon monoxide, which is a harmful component, a gas obtained after the reforming reaction is subjected, in some cases, to a shift reaction as in the following reaction equation:

$$CO + H_2 \rightarrow H_2 + CO_2$$

The shift reaction is conducted at a temperature of about 300°C.

Conventionally, Cu/Zn-based catalysts, Cu/Zn/Al-based catalysts, or Cu/Cr-based catalysts (hereinafter, collectively referred to as "Cu catalyst") are used for the shift reaction. Precious metal-based catalysts, such as $Pt/Al_2O_3$ or the like, are also used in some cases. With regard to the shift catalyst, it is desirable that the CO reduction rate (%), that is, the mole ratio of the amount of CO converted into $CO_2$ by the reaction to the amount of CO present before the reaction, be high. It is also desirable that the shift catalyst have sufficient heat resistance so as to withstand abrupt heating at the time of a warm-up, a transient increase in temperature, and the like.

The Cu catalyst has a property that the capability, that is, the CO reduction rate, sharply decreases with increases in the space velocity SV. Therefore, in order to process a large amount of CO using the Cu catalyst, it is necessary to increase the catalyst volume, that is, increase the size of the reactor.

Although the precious metal-based catalysts have a characteristic that the catalysts exhibit stable capability even in a high-SV environment, the precious metal-based catalysts achieve a CO reduction rate of only about 1/3 of that achievable by the Cu catalyst in a low-SV environment. In order to process a large amount of CO using the precious metal-based catalyst, an increase in the amount of the catalyst used is considered necessary, so that the reactor is increased in size with a corresponding cost increase, according to the conventional art.

Furthermore, the conventional catalysts are known to have a withstanding temperature of about 400°C. If the withstanding temperature is exceeded, a sintering phenomenon, that is, a phenomenon in which metals constituting the catalyst become melted and bound, occurs, so that the catalyst capability remarkably deteriorates. The sintering is an irreversible phenomenon. Therefore, if a transitional temperature increase occurs, remarkable deterioration of the capability of the shift catalyst results in some cases. Therefore, in some cases, CO cannot be sufficiently processed by a shift reaction portion, thus leading to drawbacks, for example, a reduced partial pressure of hydrogen in the fuel gas, the poisoning of fuel cell electrodes, etc.

SUMMARY OF THE INVENTION

It is an object of the invention to improve the CO reduction rate of a shift catalyst, reduce the capability deterioration caused by an increased SV, and improve the heat resistance.

In order to achieve at least a portion of the aforementioned objects, embodiments of a shift catalyst for use in a shift reaction that produces $H_2$ and $CO_2$ from CO and $H_2O$ in accordance with the invention has a construction in which Pt is supported by a porous body of $TiO_2$ to which a selected oxide is added. The predetermined oxide added is at least one oxide of oxides of Al, Si, P, S and V. Therefore, it becomes possible to improve the CO reduction rate, reduce the capability deterioration caused by an increased SV, and improve the heat resistance.

The addition of the oxide to $TiO_2$ can be realized by various methods. For example, the oxide can be added during a process of forming a powder of $TiO_2$ by hydrolyzing or baking a raw material containing Ti. A production method for a catalyst in this embodiment includes:

(a) mixing a liquid or gel-form raw material of $TiO_2$ containing Ti and a liquid or gel-form raw material of the oxide containing at least one of Al, Si, P, S and V; and
(b) baking a mixture obtained by the mixing. The baking provides a $TiO_2$ material to which the oxide is added. Using the $TiO_2$ material, a porous body is formed. The porous body can be loaded with Pt by adsorption-supporting or the like.

By the production method, a porous body in which the oxide is distributed all over is formed. The addition of the oxide is sufficient if the oxide is added at a site in the porous body that contributes to the catalyst activity. Therefore, the addition of the oxide to $TiO_2$ may also be accomplished by a method in which a porous

body of $TiO_2$ is loaded with the additive by impregnation. A production method for a catalyst in this embodiment includes:

(a) forming a porous body of $TiO_2$;
(b) impregnating pores of the porous body with a solution containing at least one of salts of Al, Si, P, S and V; and
(c) heating the porous body impregnated in the impregnating. Due to the heating, unnecessary components contained in the salt are removed, and a porous body of $TiO_2$ to which the oxide is added is formed. Then, a catalyst can be obtained merely by loading the porous body with Pt.

Embodiments of the invention are not limited to those to which only at least one of oxides of Al, Si, P, S and V is added. If the production method in which the porous body is impregnated with the solution is employed, there is a possibility that impurities, such as nitrate salts, carbonate salts, hydroxides and the like of Al, Si, P, S and V will remain in addition to the oxide. If a sufficient amount of the oxide is supported on the porous body, no problem occurs if such impurities remain. It is also possible to add a combination of a plurality of kinds of oxides.

It is preferable that the amount of Pt supported on the porous body be about 0.1 wt.% or greater. It is more preferable that the amount of Pt supported be at least about 3 wt.% and at most about 20 wt.%.

The "wt.%" or percent by weight used for the amount of Pt supported means the proportion of the weight of Pt supported with respect to the entire weight of the catalyst including Pt supported.

Furthermore, the capability of the shift catalyst also changes depending on the amount of the oxide added.

For example, if $Al_2O_3$ is added, a preferable amount of the oxide added is about 15 wt.% or less. It is more preferable that the amount of $Al_2O_3$ be at least about 0.1 wt.% and at most about 10 wt.%.

Still further, for example, if $SiO_2$ is added to the shift catalyst in accordance with embodiments of the invention, it is preferable that the amount of the oxide contained be about 15 wt.% or less. It is more preferable that the amount of the oxide contained be at least about 1.5 wt.% and at most about 11 wt.%.

The "wt.%" used for the amount of the oxide added means the proportion of the weight of the oxide added with respect to the entire weight of the oxide and $TiO_2$.

A reactor including the shift catalyst of the invention and a retaining member for retaining the shift catalyst are also provided as embodiments of the invention.

An exemplary embodiment of the reactor can include the shift catalyst in the form of pellets, and the retaining member is a container that houses the shift catalyst. It is also possible to provide a construction in which a honeycomb monolith is used as a retaining member and pore surfaces of the honeycomb monolith are coated with the shift catalyst.

Of course, the reactor formed as described above may be termed a shift catalyst within the scope of the invention.

The aspects of the invention are not to be limited to the shift catalyst as described above. According to another aspect of the invention, there is e.g. provided a reactor or a fuel cell equipped with an above-described shift catalyst.

A reactor according to an another aspect of the invention comprises the above-described shift catalyst and a retainer member that retains the shift catalyst.

A fuel cell system according to an another aspect of the invention comprises a reformer portion into which raw material is introduced, the raw material being subjected to a reforming reaction in the reformer portion to produce a reformed gas comprising hydrogen rich gas, a shift portion into which the reformed gas is introduced and undergoes shift reaction therein, the shift portion containing the above-described shift catalyst, and a fuel cell into which the reformed gas that has undergoes shift reaction in the shift portion is introduced, the fuel cell generating electric power.

BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:

FIG. 1 shows results of an experiment indicating the effect of the presence/absence of an added oxide on the CO reduction rate;
FIG. 2 shows further results of an experiment indicating the effect of the presence/absence of an added oxide on the CO reduction rate;
FIG. 3 is a graph showing results of an experiment regarding the effect of SV (space velocity) on the CO reduction rate;
FIG. 4 is a graph showing results of an experiment regarding the heat resistance of the catalyst;
FIG. 5 is a graph showing results of an experiment regarding the effect of the amount of $Al_2O_3$ added on the amount of CO reduction;
FIG. 6 is a graph showing results of an experiment regarding the effect of the amount of $SiO_2$ added on the amount of CO reduction;
FIG. 7 illustrates a construction of a fuel cell system; and
FIG. 8 is a flowchart illustrating a production method of the catalyst.

## DETAILED DESCRIPTION OF PREFERRED EMBODIMENTS

Embodiments of the invention will be described with reference to examples.

A. Effect of Presence/Absence of Added Oxide on CO Reduction Rate (I)

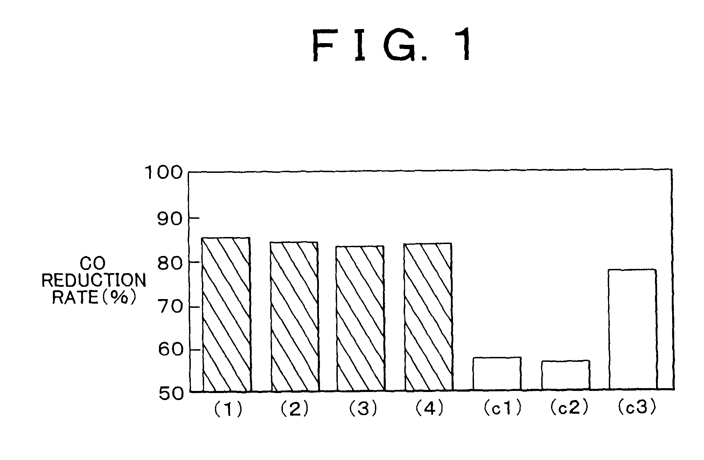

FIG. 1 indicates results of an experiment indicating the effects of the presence/absence of an added oxide on the CO reduction rate. As examples of the invention, four kinds of catalysts (1) to (4) described below were used.

(1): a catalyst ($Pt/Al_2O_3$-$TiO_2$) to which 4 wt.% of $Al_2O_3$ is added
(2): a catalyst ($Pt/SiO_2$-$TiO_2$) to which 6 wt.% of $SiO_2$ is added
(3): a catalyst ($Pt/P_2O_5$-$TiO_2$) to which 4 wt.% of $P_2O_5$ is added
(4): a catalyst ($Pt/SO_4$-$TiO_2$) to which 4 wt.% of $SO_4$ is added

As comparative examples, three kinds of conventional catalysts (c1) to (c3) described below were used.

(c1): $Pt/TiO_2$
(c2): $Pt/Al_2O_3$
(c3): $CuO_X/ZnO/Al_2O_3$

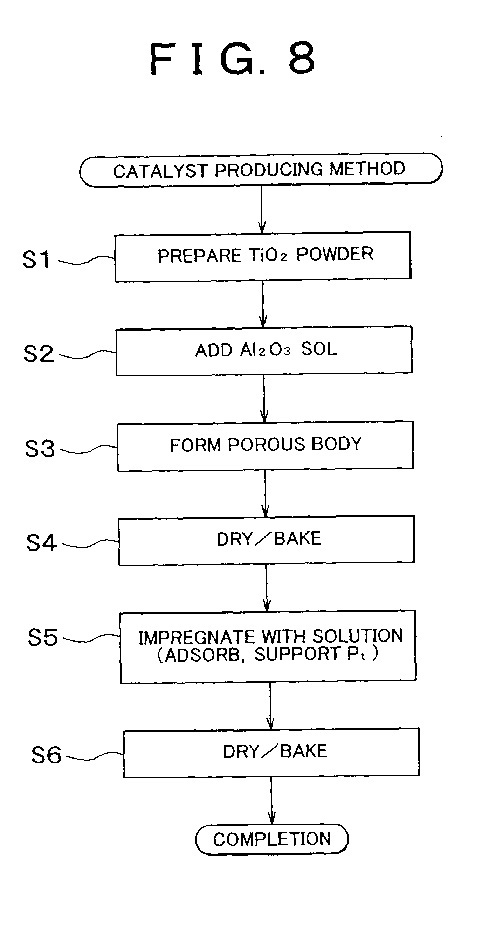

The catalyst of Example (1) is a catalyst produced by a method illustrated in FIG. 8. As illustrated in FIG. 8, a powder of $TiO_2$ containing Al in an amount of 4 wt.% in terms of $Al_2O_3$ is prepared in step S1. In the example, the powder was obtained by mixing a gel-like hydroxide containing Al with a gel of TiOH, and baking the mixture during the process of preparing $TiO_2$. The hydroxide containing Al can be, for example, a gel of Al$(OH)_3$ obtained by hydrolyzing isopropoxide aluminate.
In step S2, an $Al_2O_3$ sol is added in an amount of 10 wt.% in terms of solid content to the powder obtained as described above, thereby obtaining a slurry of $Al_2O_3$ (4 wt.%)-$TiO_2$. $Al_2O_3$ added in the form of a sol serves as an adhesive in the process of coating a honeycomb monolith, and does not affect the composition of the catalyst.
Then in step S3, a honeycomb monolith of 45 mm in diameter $\times$ 175 mm in length having pores at a density of 400 cells/in$^2$ is coated with the slurry obtained in step S2 by applying the slurry up to a thickness that achieves 120 g/liter in terms of the weight resulting after a drying process. The porous body of $TiO_2$ is obtained.
Subsequently in step S4, the porous body was dried at 120°C for 24 hours, and then was baked in air at a temperature of 350°C for 2 hours.
Subsequently in step S5, using a dinitrodiammine platinum nitrate salt solution, the honeycomb monolith, that is, the porous body, was loaded with Pt so as to achieve a loading amount of 12 g/liter in terms of Pt.
Then, in step S6, the monolith was dried at 120°C for 24 hours, and then was baked in air at 350°C for 2 hours again, thereby producing Catalyst (1). Because Pt was supported in an amount of 12 g/liter with respect to the coating of 120 g/liter, the amount of Pt supported was about 9% by weight.
Although the reason why the catalyst capability improves is not completely revealed, a factor speculated for the improvement is that addition of an oxide increases the specific surface area of the support that is loaded with Pt. The catalyst capability improvement also depends on Pt. Therefore, the catalyst of the invention varies in capability depending on the amount of Pt supported. It has been confirmed that if the amount of Pt supported is not greater than about 0.1 wt.%, a sufficient catalyst capability cannot be achieved. It has also been confirmed that if Pt is supported in an amount exceeding about 20 wt.%, no further improvement in the catalyst capability is exhibited. Therefore, it is preferable that the amount of Pt supported be at least about 0.1 wt.%. A more preferable amount of Pt supported is at least about 3 wt.% and at most about 20 wt.%. The amounts of Pt supported in the examples are within this range. If the amount of Pt supported is in a range of at least about 20 wt.% and above, the catalyst performance does not substantially change. Thus, about 20 wt.% is an upper limit of the amount of Pt supported, in view of good cost performance of the catalyst. The "wt.%" or percent by weight used for the amount of Pt supported means the proportion of the weight of Pt supported to the total weight of the catalyst that includes supported Pt.
According to the above-described production method, a porous body having an oxide distributed over the entire body is produced. As for addition of the oxide, a sufficient addition can be achieved by adding the oxide at sites in the porous body that contribute to the catalyst activity. Therefore, the addition of the oxide to $TiO_2$ can also be accomplished by a method in which a porous body of $TiO_2$ is loaded with an additive through impregnation. As for the catalyst producing method in the aforementioned embodiment, a porous body of $TiO_2$ is formed, and then the porous body is impregnated with a solution containing at least one salt of salts of Al, Si, P, S and V so as to impregnate pores of the porous body with the salt solution. Then, the salt solution-impregnated porous body is heated. Due to the heating, unnecessary components contained in the salt are removed, and a porous body of $TiO_2$ having an oxide added to the porous body is formed. The porous body is then loaded with Pt. This production method also provides the catalysts of Examples (1) to (4). The aforementioned solution may be, for example, a nitrate salt solution, a acetate salt solution, and the like. It has been confirmed that if a body impregnated with a nitrate salt solution is heated, the nitrate salt changes into an oxide by way of a carbonate salt. The heating temperature varies depending on the solution for impregnation. In the case of a nitrate salt solution, heating at or above about 250°C is necessary.

Catalyst (2) was produced by using $SiO_2$ (6 wt.%)-$TiO_2$ instead of $Al_2O_3$ (4 wt.%)-$TiO_2$. Catalyst (3) was produced by using $P_2O_5$ (4 wt.%)-$TiO_2$. Catalyst (4) was produced by using $SO_4$ (4 wt.%)-$TiO_2$. Catalysts (2) to (4) can be produced by the same method as employed for Catalyst (1).

Comparative Examples (c1) and (c2) were produced by methods similar to that used for Catalyst (1) in which $TiO_2$ and $Al_2O_3$ were used respectively, instead of $Al_2O_3$ (4 wt.%)-$TiO_2$. The catalyst of Comparative Example (c3) was obtained by coating a honeycomb monolith with MDC4 (trademark) made by Touyou CCI so as to achieve 120 g/liter. Comparative Examples (c1) and (c2) are precious metal-based catalysts. Comparative Example (c3) is a Cu catalyst.

With regard to the catalysts prepared as described above, CO reduction rates (%) were measured under the following condition. Results of the experiment are shown in FIG. 1. The CO reduction rate refers to the proportion of CO turned into carbon dioxide by the shift reaction to the entire amount of CO present before the reaction.

Test gas composition (dry state): $N_2$ = 34.7%, $H_2$ = 46.8%, CO = 6.27%, $CO_2$ = 11.9%.
Amount of steam: $H_2O$/CO = 6.3
Space velocity SV (dry state): 3,700/h

As indicated in FIG. 1, it was confirmed that the catalysts of Examples (1) to (4) achieved very high CO reduction rates in comparison with the catalysts of Comparative Examples (c1) and (c2). It was also confirmed that the capabilities of the catalysts of Examples (1) to (4) surpassed the capability of a Cu catalyst, that is, Comparative Example (c3), which is said to achieve a high CO reduction rate in a low-SV environment.

In the above-described catalyst producing method, a catalyst is produced by adding an oxide to a powder of $TiO_2$. As for the catalysts of the Examples, it has been confirmed that if a powder of $TiO_2$ and a powder of an oxide are mixed in a solid state, effects of addition cannot be achieved.

B. Effect of Presence/Absence of Added Oxide on CO Reduction Rate (II)

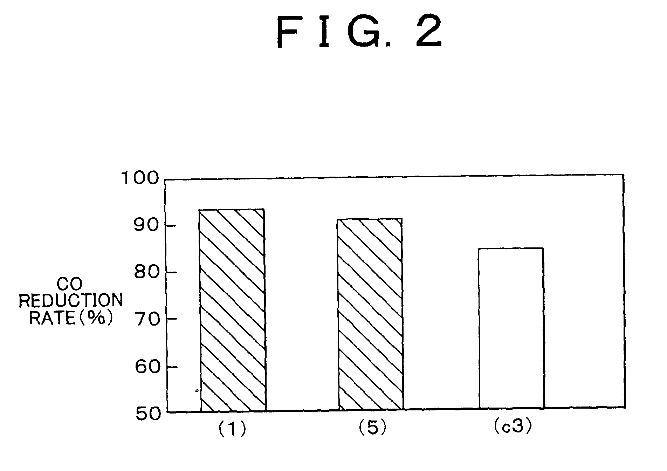

FIG. 2 is a diagram presenting results of a second experiment indicating the effect of the presence/absence of an oxide additive on the CO reduction rate. Catalyst (1) and Comparative Example (c3) mentioned above in conjunction with the experiment results, and Catalyst (5) according to an exemplary embodiment of the invention, were used.
(5): a catalyst (Pt/$V_2O_5$-$TiO_2$) to which 4 wt.% of $V_2O_5$

is added

As for the production method for Catalyst (5), the catalyst was produced by a method similar to that used for Catalyst (1) in which $V_2O_5$ (4 wt.%)-$TiO_2$ was used instead of $Al_2O_3$ (4 wt.%)-$TiO_2$.

With regard to the catalysts prepared as described above, CO reduction rates were measured under the following condition. Results of the experiment are indicated in FIG. 2. Because of the instruments used for the experiment, the composition of the test gas slightly differs from that related to FIG. 1.

Test gas composition (dry state): $N_2$ = 35.6%, $H_2$ = 48.1%, CO = 3.98%, $CO_2$ = 12.3%.
Amount of steam: $H_2O$/CO = 7.4
Space velocity SV (dry state): 2,600/h

As indicated in FIG. 2, it was confirmed that the capabilities of the catalysts of Examples (1) to (5) surpassed the capability of a Cu catalyst, that is, Comparative Example (c3), which is said to achieve a high CO reduction rate in a low-SV environment.

C. Effect of SV

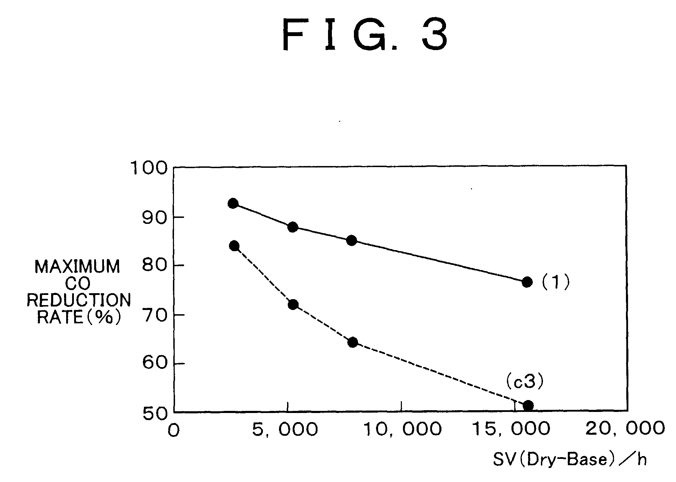

FIG. 3 is a graph indicating results of an experiment regarding the effect of SV on the CO reduction rate. The graph indicates changes in the CO reduction rate caused by changing SV, with regard to Catalyst (1) and Comparative Example (c3) mentioned above. The test gas and the amount of steam were the same as in the condition of the experiment of FIG. 1, and only the space velocity SV was changed within the range of 2,700/h to 16,000/h. The maximum CO reduction rate means a maximum value of the CO reduction rates achieved at various space velocities SV.

As for the catalyst of Comparative Example (c3), the CO reduction rate sharply reduced with increases in the space velocity SV. In the range experimented, a capability reduction of about 35% was observed. As for the catalyst of Example (1), in contrast, the capability reduction was mitigated to about 15%. Therefore, it was confirmed that the catalyst of Example (1) exhibited a stable catalyst capability even in an environment of a high SV of 16,000/h. Although only results of the experiment with regard to Catalyst (1) are shown, similar characteristics are estimated for Catalysts (2) to (5).

D. Heat Resistance:

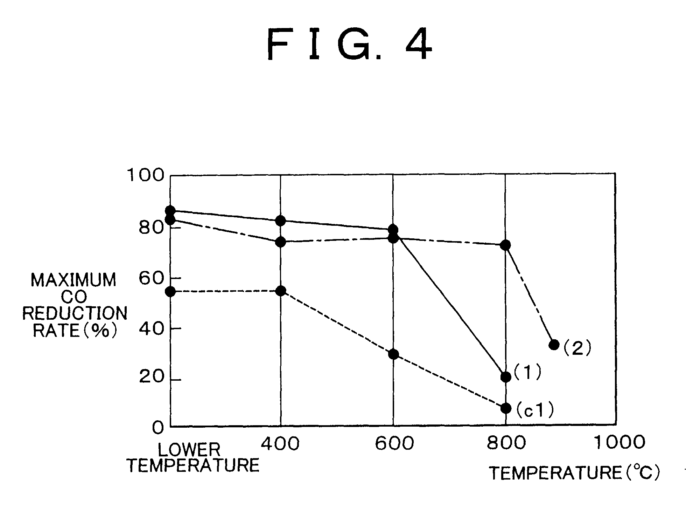

FIG. 4 is a graph indicating results of an experiment with regard to heat resistance of catalysts. The heat resistances of catalysts of Examples (1) and (2) and Comparative Example (c1) are indicated. CO reduction rates were measured after the catalysts were exposed to states of temperatures of 400 to 900°C in a $N_2$ gas containing 10% $H_2$ for 5 hours. CO reduction rates were measured in the same conditions as in the experiment of FIG. 1.

It is indicated in the graph that the catalyst capability of Comparative Example (c1) sharply decreased at and above 400°C, and therefore the withstanding temperature of Comparative Example (c1) was 400°C. In contrast, it was confirmed that the catalyst of Example (1) retained its capability up to 600°C, and therefore the withstanding temperature thereof was 600°C or higher. It was also confirmed that the catalyst of Example (2) retained its capability up to 800°C, and therefore the withstanding temperature thereof was 800°C or higher. Thus, it was confirmed that the catalysts of Examples (1) and (2) achieved remarkable improvements in heat resistance, in comparison with the catalyst of Comparative Example (c1). Although only results regarding Catalysts (1) and (2) have been presented herein, similar properties are estimated for Catalysts (3) to (5) also.

E. Effect of Amount of Additive

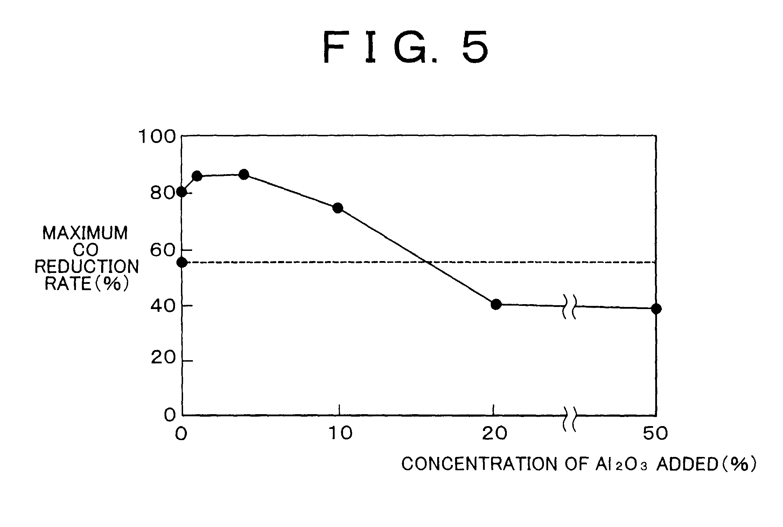

FIG. 5 is a graph indicating results of an experiment regarding the effect of the amount of $Al_2O_3$ added on the amount of CO reduction. Amounts of CO reduction were measured while the amount of $Al_2O_3$ added was varied under the same condition as in FIG. 1. The amounts of $Al_2O_3$ added in the experiment were the following six amounts: 0.1 wt.%, 1 wt.%, 4 wt.%, 10 wt.%, 20 wt.%, and 50 wt.%.

As indicated in the graph, the addition of $Al_2O_3$ in amounts exceeding about 15 wt.% resulted in amounts of CO reduction that were less than the amount of CO reduction achieved by avoiding addition of $Al_2O_3$. Therefore, it is desirable that the amount of $Al_2O_3$ added be about 15 wt.% or less.

It was confirmed that even the addition of only 0.1 wt.% of $Al_2O_3$ improved the CO reduction rate by at least 20% in comparison with the CO reduction rate achieved by avoiding addition of $Al_2O_3$. It is speculated that even the addition of a still smaller amount of $Al_2O_3$ will achieve a sufficient improvement. If the amount of $Al_2O_3$ added was increased over about 1 wt.%, the capability reached its peak. If the amount of $Al_2O_3$ added was further increased, the capability gradually decreased. If the amount of $Al_2O_3$ added is about 15 wt.% or great, there is a possibility that the capability will become less than the capability achieved by avoiding addition of $Al_2O_3$. These experimental results verified that a good result can be obtained if the amount of $Al_2O_3$ added is within the range between at least about 0.1 wt.% and at most about 10 wt.%. It was also verified that addition of about 1 to about 4 wt.% of $Al_2O_3$ is optimal in view of the amount of CO reduction. However, if the amount of $Al_2O_3$ added is outside the range between at least about 0.1 wt.% and at most about 10 wt.%, a sufficient effect can be expected provided that the amount of $Al_2O_3$ added is about 15 wt.% or less.

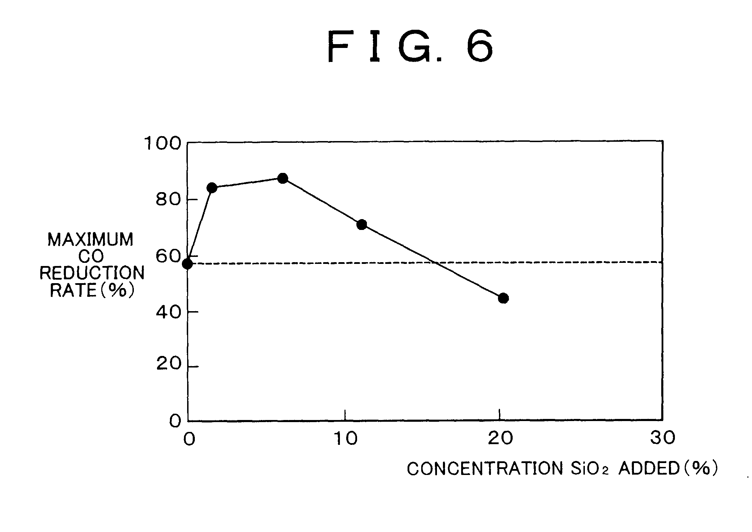

FIG. 6 is a graph indicating results of an experiment regarding the effect that the amount of $SiO_2$ added has on the amount of CO reduction. Amounts of CO reduction were measured while the amount of $SiO_2$ added was varied under the same conditions as in FIG. 1. The amounts of $SiO_2$ added in the experiment were the following four amounts: 1.5 wt.%, 6 wt.%, 11 wt.% and 20 wt.%.

As indicated in the graph, the addition of $SiO_2$ in amounts exceeding about 15 wt.% resulted in amounts of CO reduction that were less than the amount of CO reduction achieved by avoiding addition of $SiO_2$. Therefore, it is desirable that the amount of $SiO_2$ added be at most about 15 wt.%.

It was confirmed that even addition of only 1.5 wt.% of $SiO_2$ improved the CO reduction rate by at least 20% in comparison with the CO reduction rate achieved by avoiding addition of $SiO_2$. It is speculated that even the addition of a still smaller amount of $SiO_2$ will achieve a sufficient improvement. As the amount of $SiO_2$ added was increased, the capability reached its peak. If the amount of $SiO_2$ added was further increased, the capability gradually decreased. These experimental results verified that a good result can be obtained if the amount of $SiO_2$ added is within the range between at least about 1.5 wt.% and at most about 11 wt.%. It was also verified that addition of about 6 wt.% of $SiO_2$ is optimal in view of the amount of CO reduction. However, if the amount of $SiO_2$ added is outside the range between at least about 1.5 wt.% and at most about 11 wt.%, a sufficient effect can be expected provided that the amount of $SiO_2$ added is about 15 wt.% or less.

From these experimental results, it can be said that with regard to other oxides, a preferable range of the amount thereof added is at most 15 wt.%, and a more preferable range is at most 10 wt.%. The "wt.%" or percent by weight used for the amount of an additive means the proportion of the weight of an oxide added with respect to the total weight of oxide and $TiO_2$.

F. Advantages and Applications to System

According to the catalysts of Examples described above, it is possible to realize a very high CO reduction rate as verified in FIGS. 1 and 2. It is also possible to realize a high CO reduction rate even in a high-SV environment as indicated in FIG. 3. Due to these features, employment of a catalyst as in the foregoing examples will reduce the amount of catalyst needed for the processing by a shift reaction. Therefore, the catalyst as in the foregoing examples contributes to a size reduction of a shift reaction portion.

The catalysts as in the foregoing examples have high heat resistance, that is, withstand high temperatures such as about 600°C or about 800°C. Therefore, the catalysts have an advantage of sufficiently withstanding transitional temperature increases. Advantages of improved heat resistance will be described below by taking a fuel cell system as an example.

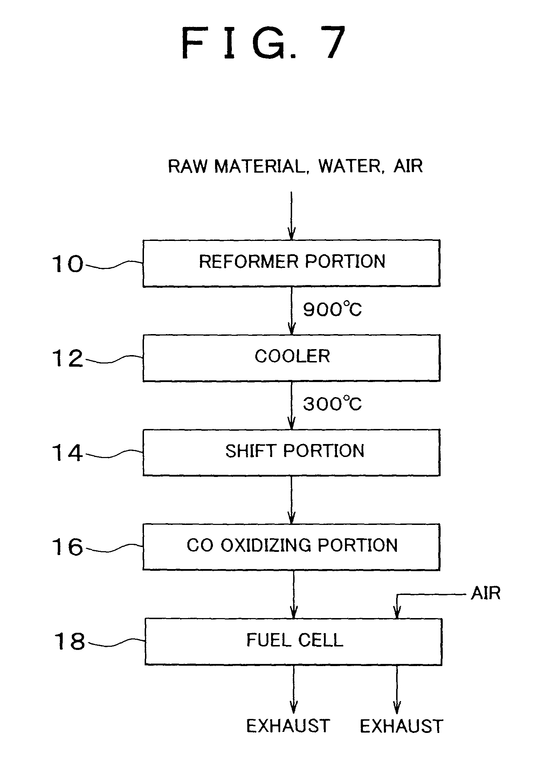

FIG. 7 is a diagram illustrating a construction of a fuel cell system. This system is formed by a fuel cell 18 and a fuel gas generating apparatus for generating a fuel gas to be supplied to the fuel cell 18. The fuel gas generating apparatus generates hydrogen through a chemical reaction of a predetermined raw material. The raw material may be hydrocarbon such as a natural gas, gasoline or the like, an alcohol such as methanol or the like, ether aldehyde, etc.

In a reformer portion 10, raw material, together with steam and air, is subjected to a reaction that is termed reforming reaction or partial oxidizing reaction, thereby producing a reformed gas that contains CO and hydrogen as major components. If the raw material is gasoline, the aforementioned reaction is conducted at a temperature of about 900°C. Other temperatures can be used, depending on the raw material. A catalyst used for the reforming reaction is housed in the reformer portion 10. Because the catalyst as in Examples realizes a high CO reduction rate even in a high-SV environment as described above, the shift portion 14 can be reduced in size.

The reformed gas is introduced into the shift portion 14 after being cooled to about 300°C by a cooler 12. The shift portion 14 contains a catalyst according to the invention, such as in Examples. The catalyst may be housed in the shift portion 14 in the form of a coating on a honeycomb monolith as described above in conjunction with Examples, or the catalyst can be in the form of pellets.

The shift reaction is an equilibrium reaction expressed by the following equation:

$$CO + H_2O \leftrightarrow H_2 + CO_2$$

The reaction progresses rightward at a temperature of about 300°C. At an extremely high temperature, the reaction progresses leftward, that is, a reverse shift reaction occurs. For the fuel cell, there is a need to accelerate the rightward reaction, in order to reduce the amount of CO to avoid the poisoning of electrodes, and in order to increase the partial pressure of hydrogen in the fuel gas. Therefore, it becomes necessary to cool the high-temperature gas from the reformer portion 10 to a temperature suitable for the shift reaction through the use of the cooler 12.

The reformed gas discharged from the shift portion 14 contains a residual amount of unreacted CO. The reformed gas is subjected to a chemical reaction that selectively oxidizes CO in a CO oxidizing portion 16, and then is supplied as a fuel gas to an anode of the fuel cell 18. Using the fuel gas and oxygen from air, the fuel cell 18 generates electric power. A gas remaining after the power generation is discharged. It is also possible to adopt a construction in which hydrogen obtained in the reformer portion 10 and the shift portion 14 is separated via a separator membrane having a hydrogen selective permeability, and then is supplied to the fuel cell 18. Furthermore, because there is a possibility that an exhaust gas from the anode may contain a residual amount of hydrogen that is not consumed for the reaction in the fuel cell 18, the exhaust gas from the anode may be circulated as a fuel gas.

In the system illustrated in FIG. 7, the amount of the raw material that is introduced into the reformer portion 10 is controlled in accordance with the requested output of the fuel cell 18. If the requested output sharply increases, the amount of flow of the high-temperature reformed gas discharged from the reformer portion 10 sharply increases. If the cooler 12 cannot follow such an increase in the gas flow, there is a possibility of a temporary increase of the temperature of the shift portion 14. However, because the shift catalyst as in Examples has high heat resistance, the shift catalyst is able to retain a sufficiently high catalyst capability even if there is a temperature increase as mentioned above. Therefore, it is possible to avoid installation of a large-size cooler 12 based on the consideration of a temporary temperature increase. Furthermore, it is unnecessary to limit the amount of the raw material supplied to the reformer portion 10 so as to avoid such a temperature increase. Therefore, if the catalyst as in the Examples is used, the size of the apparatus can be reduced. Still further, the flexibility in controlling the operation is improved, so that the responsiveness to changes in the requested output can be improved.

The heat resistance of the shift catalyst is also effective during a warm-up period. In some cases, only the oxidizing reaction of the raw material occurs in the reformer portion 10 during a warm-up in the system illustrated in FIG. 7. This oxidizing reaction thoroughly oxidizes C in the raw material into $CO_2$. The reaction is an exothermic reaction, so that a very high-temperature gas can be produced. During warm-up, the high-temperature gas is caused to flow to the catalysts so as to raise the temperature of each catalyst. In order to efficiently conduct a warm-up, the high-temperature gas is not cooled. As a result, a very high-temperature gas also flows into the shift portion 14. Because the shift catalyst as in Examples has a high heat resistance, it is not necessary to limit the amount of the high-temperature gas based on the consideration of the heat resistance of the shift portion 14. Therefore, a sufficient amount of high-temperature gas is allowed to flow during a warm-up, so that the warm-up can be quickly completed.

The shift catalyst of the invention is highly useful in fuel cell systems that have strong demands for size reduction, high responsiveness and quick warm-up characteristics. Examples of such a system include a fuel cell system installed in a vehicle, and the like.

While the various examples of the invention have been described above, it is to be understood that the invention is not limited to the disclosed examples or constructions. To the contrary, the invention is intended to cover various modifications and equivalent arrangements without departing from the spirit of the invention. Although only limited experimental data is presented above in conjunction with Examples, the invention can be realized without being restricted by the above-presented data. As for the above-presented oxides, a single kind of oxide can be added, or a combination of a plurality of oxides can be added.

A shift catalyst includes Pt supported on a porous body of $TiO_2$ to which a predetermined oxide is added. The predetermined oxide added is at least one oxide of oxides of Al, Si, P, S and V. The addition of the oxide can be accomplished by mixing a raw material gel of the oxide during a process of forming a powder of $TiO_2$, or it can be accomplished by impregnating a porous body of $TiO_2$ with a nitrate salt solution of the oxide or the like. The amount of Pt supported is preferably about 0.1 to about 20 wt.%. The amount of the oxide added is preferably about 15 wt.% or less. The catalysts (1) $\sim$ (4) containing the oxide exhibits a higher CO reduction rate than one of conventional catalysts (c1) $\sim$ (c3). Furthermore, the catalyst reduces the capability deterioration under a high-SV condition, and also has heat resistance.

## Claims

1. A shift catalyst for a shift reaction that produces $H_2$ and $CO_2$ from CO and $H_2O$, the shift catalyst **characterized by** comprising:

   at least one oxide selected from the group consisting of oxides of Al, Si, P, S and V;
   a porous body of $TiO_2$ to which the at least one oxide is added; and
   Pt supported by the porous body of $TiO_2$.

2. The shift catalyst according to claim 1, **characterized in that** an amount of Pt supported by the porous body of $TiO_2$ is at least about 0.1 wt.%.

3. The shift catalyst according to claim 2, **characterized in that** the amount of Pt supported by the porous body of $TiO_2$ is from at least about 3 wt.% to about 20 wt.%.

4. The shift catalyst according to claim 1, **characterized in that**

   the oxide is $Al_2O_3$; and
   an amount of the oxide added is at most about 15 wt.%.

5. The shift catalyst according to claim 4, **characterized in that** the amount of the oxide added is from at least about 0.1 wt.% to up to about 10 wt.%.

6. The shift catalyst according to claim 1, **character-**

ized in that

   the oxide is $SiO_2$; and

   wherein the amount of the oxide added is at most about 15 wt.%.

7. The shift catalyst according to claim 6, **characterized in that** the amount of the oxide added is from at least about 1.5 wt.% to about 11 wt.%.

8. A reactor for conducting a shift reaction that produces $H_2$ and $CO_2$ from CO and $H_2O$, **characterized by** comprising:

   a shift catalyst according to claim 1; and
   a retainer member that retains the shift catalyst.

9. The reactor according to claim 8, **characterized in that**

   the shift catalyst comprises pellets, and
   the retainer member is a container that houses the shift catalyst.

10. The reactor according to claim 8, **characterized in that**

    the retainer member is a honeycomb monolith; and
    the shift catalyst is retained by a coating on a porous surface of the honeycomb monolith.

11. A fuel cell system, **characterized by** comprising:

    a reformer portion (10) into which raw material is introduced, the raw material being subjected to a reforming reaction in the reformer portion (10) to produce a reformed gas comprising hydrogen rich gas;
    a shift portion (14) into which the reformed gas is introduced and undergoes shift reaction therein, the shift portion (14) containing a shift catalyst according to claim 1; and
    a fuel cell (18) into which the reformed gas that has undergoes shift reaction in the shift portion is introduced, the fuel cell (18) generating electric power.

12. The fuel cell system of claim 11, **characterized in that** an amount of Pt supported by the porous body of $TiO_2$ is at least about 0.1 wt.%.

13. The fuel cell system according to claim 12, **characterized in that** the amount of Pt supported by the porous body of $TiO_2$ is from at least about 3 wt.% to about 20 wt.%.

**14.** The fuel cell system according to claim 11, **characterized in that**

the oxide is $Al_2O_3$; and
an amount of the oxide added is at most about 15 wt.%.

**15.** The fuel cell system according to claim 14, **characterized in that** the amount of the oxide added is from at least about 0.1 wt.% to up to about 10 wt.%.

**16.** The fuel cell system according to claim 11, **characterized in that**

the oxide is $SiO_2$; and

wherein the amount of the oxide added is at most about 15 wt.%.

**17.** The fuel cell system according to claim 16, **characterized in that** the amount of the oxide added is from at least about 1.5 wt.% to about 11 wt.%.

**18.** A method of converting raw material to electric power, **characterized by** comprising:

a step of subjecting raw material to a reforming reaction to produce a reformed gas comprising carbon hydrogen rich gas;
a step of introducing the reformed gas into a shift portion containing a shift catalyst according to claim 1, the reformed gas undergoes shift reaction therein;
a step of generating electric power in a fuel cell using the reformed gas that has undergoes shift reaction in the shift portion.

**19.** A method of producing a shift catalyst, **characterized by** comprising:

a step (S1, S2) of mixing a liquid or gel-form raw material of $TiO_2$ containing Ti and a liquid or gel-form raw material of an oxide containing at least one member selected from the group consisting of Al, Si, P, S and V to form a mixture;
a step (S4) of baking the mixture;
a step (S3) of forming a porous body of the mixture; and
a step (S5) of adsorbing and supporting Pt on the porous body.

**20.** A method of producing a shift catalyst, **characterized by** comprising:

a step (S3) of forming a porous body of $TiO_2$;
a step (S2) of impregnating pores of the porous body with a solution comprising at least one salt selected from the group consisting of salts of Al, Si, P, S and V;
a step (S4) of heating the porous body impregnated with the solution; and
a step (S5) supporting Pt on the porous body.

# F I G. 1

EP 1 184 445 A2

# F I G. 2

EP 1 184 445 A2

# F I G. 3

# FIG. 4

EP 1 184 445 A2

# FIG. 5

MAXIMUM CO REDUCTION RATE (%) vs. CONCENTRATION OF $Al_2O_3$ ADDED (%)

EP 1 184 445 A2

# F I G. 6

MAXIMUM CO REDUCTION RATE (%) vs CONCENTRATION $SiO_2$ ADDED (%)

EP 1 184 445 A2

# FIG. 7

RAW MATERIAL, WATER, AIR

↓

10 —— | REFORMER PORTION |

900°C

12 —— | COOLER |

300°C

14 —— | SHIFT PORTION |

↓

16 —— | CO OXIDIZING PORTION |

—— AIR
↓

18 —— | FUEL CELL |

↓                    ↓

EXHAUST      EXHAUST

# FIG. 8

```
        ( CATALYST PRODUCING METHOD )
                      |
                      v
S1 ── [    PREPARE TiO₂ POWDER    ]
                      |
                      v
S2 ── [      ADD Al₂O₃ SOL        ]
                      |
                      v
S3 ── [    FORM POROUS BODY       ]
                      |
                      v
S4 ── [       DRY / BAKE          ]
                      |
                      v
S5 ── [ IMPREGNATE WITH SOLUTION  ]
      [  (ADSORB, SUPPORT Pt )     ]
                      |
                      v
S6 ── [       DRY / BAKE          ]
                      |
                      v
              ( COMPLETION )
```